Europäisches Patentamt

European Patent Office

Office européen des brevets

(19)

(11) **EP 0 924 922 A1**

(12) # DEMANDE DE BREVET EUROPEEN

(43) Date de publication:
**23.06.1999 Bulletin 1999/25**

(51) Int. Cl.6: **H04M 15/00**, H04M 15/28

(21) Numéro de dépôt: 98403105.4

(22) Date de dépôt: **08.12.1998**

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **19.12.1997 FR 9716443**

(71) Demandeur: **FRANCE TELECOM
75015 Paris (FR)**

(72) Inventeur: **Chemin, François
22300 Lannion (FR)**

(74) Mandataire: **Martinet & Lapoux
43 Boulevard Vauban,
B.P. 405 - Guyancourt
78055 St. Quentin en Yvelines Cedex (FR)**

(54) ## Procédé de signalement de dépassement de seuil de consommation téléphonique

(57)     Deux serveurs spécialisés reliés entre eux et à l'autocommutateur de rattachement d'un terminal d'usager reçoivent depuis un centre d'enregistrement de facturation les coûts de communications téléphoniques établies depuis le terminal d'usager. Lorsque la somme (SOMC) des coûts cumulés au cours d'une période (P) dépasse un seuil de coût (SEC), les serveurs notifient ce dépassement au terminal d'usager, par exemple par une tonalité ou l'allumage d'un voyant. La période et le seuil peuvent être sélectionnés par l'usager afin qu'il maîtrise sa consommation téléphonique. La consommation téléphonique d'usager peut être également maîtrisée en fonction de la somme (SOMD) des durées cumulées pendant la période (P) et la comparaison de celle-ci à un seuil de durée (SED).

FIG.2

**Description**

La présente invention concerne un procédé pour signaler un dépassement de seuil de consommation téléphonique à un usager du réseau téléphonique commuté, et plus particulièrement à un terminal de l'usager relié à un autocommutateur par une ligne téléphonique d'usager. Après chaque communication téléphonique depuis la ligne d'usager, l'autocommutateur transmet des messages de taxation à un centre de facturation calculant le coût de la communication.

Il est connu, dans un réseau de radiotéléphones mobiles, d'offrir à l'usager mobile un abonnement au forfait en durée. Pour un coût fixé dans l'abonnement et pendant une période prédéterminée généralement d'un mois, l'abonné peut consommer des communications téléphoniques nationales dont la durée totale ne doit pas excéder une à cinq heures par exemple. Dès que la consommation téléphonique excède la durée totale pendant la période prédéterminée, le radiotéléphone de l'usager reçoit un message court indiquant que les communications sont maintenant taxées normalement selon la tarification en vigueur.

Un tel service signale le dépassement d'un seuil temporel par une durée cumulée de communications téléphoniques et est indépendant du coût réel de ces communications.

La présente invention vise à signaler à n'importe quel usager du réseau téléphonique fixe le dépassement d'un seuil de consommation pendant une durée prédéterminée pour toutes les communications établies depuis sa ligne téléphonique d'usager, le seuil et la durée étant indépendant de tout forfait et fixés de préférence par l'usager pour maîtriser sa consommation téléphonique. Le commutateur de rattachement à l'usager n'est pas modifié par l'invention et n'accomplit pas des tâches de supervision supplémentaires apportées par l'invention.

A cette fin, un procédé pour signaler un dépassement de seuil de consommation téléphonique à un terminal d'usager relié à un moyen de commutation téléphonique qui transmet un message de taxation après chaque communication téléphonique depuis le terminal d'usager à un moyen de facturation de consommation téléphonique qui calcule le coût de la communication en fonction du contenu du message de taxation, est caractérisé en ce qu'il comprend les étapes suivantes :

-     fournir un moyen de notification de dépassement de seuil pouvant communiquer avec le moyen de facturation et le moyen de commutation,

-     transmettre des messages de communication incluant des coûts de communication calculés depuis le moyen de facturation vers le moyen de notification de dépassement de seuil respectivement en réponse aux messages de taxation,

-     cumuler les coûts de communication dans le moyen de notification de dépassement de seuil en une variable somme de coût au fur et à mesure des messages de communication pendant une période prédéterminée,

-     comparer la variable somme de coût à un seuil de coût prédéterminé dans le moyen de notification de dépassement de seuil en réponse à chaque message de communication,

-     transmettre un message de notification depuis le moyen de notification de dépassement de seuil au moyen de commutation dès que la variable somme de coût dépasse ledit seuil de coût pendant ladite période afin que ce dépassement de seuil soit notifié au terminal d'usager par le moyen de commutation, et

-     réitérer les étapes de cumuler, comparer et transmettre à l'expiration de chaque période prédéterminée.

Le procédé selon l'invention est ainsi offert à n'importe quel usager pour maîtriser sa consommation téléphonique exprimée en coût de communication téléphonique et au gré de celui-ci pour signaler le franchissement d'un seuil de coût réel pendant une période prédéterminée non forfaitaire. En particulier, un moyen de mémoire dans le moyen de notification de dépassement de seuil pour le terminal d'usager mémorise un numéro d'usager, et peut mémoriser au moins l'un des paramètres suivants : la période prédéterminée, le seuil de coût et un temps initial de la première période prédéterminée. Préalablement à tout déroulement de période prédéterminée, au moins l'un desdits paramètres peut être sélectionné depuis le terminal d'usager en fonction des objectifs de consommation recherchés et une mémorisation dudit au moins un paramètre sélectionné dans le moyen de mémoire.

La première réalisation de l'invention est de préférence complétée pour que l'usager puisse maîtriser sa consommation téléphonique également en terme de durée cumulée de communications téléphoniques pendant la période prédéterminée. Les étapes de cumuler, comparer et transmettre précédentes sont remplacées par les étapes de :

-     cumuler les coûts de communication et les durées de communication dans le moyen de notification de dépassement de seuil respectivement en une variable somme de coût et une variable somme de durée au fur et à mesure des messages de communication pendant une période prédéterminée,

-     comparer la variable somme de coût à un seuil de coût prédéterminé et la variable somme de durée à un seuil de durée prédéterminé dans le moyen de notification de dépassement de seuil en réponse à chaque message de communication, et

-     transmettre un message de notification depuis le moyen de notification de dépassement de seuil au moyen de commutation dès que l'une des variables somme de coût et somme de durée dépasse le seuil respectif pendant ladite période afin qu'un dépassement de seuil soit notifié au terminal d'usager par le moyen de commutation.

Dans ce cas, les paramètres incluent le seuil de durée.

Selon une deuxième réalisation de l'invention, l'usager peut suivre sa consommation téléphonique périodique en terme de coût, par exemple mensuelle, mise à jour par sous-période, par exemple quotidiennement. La période prédéterminée définie ci-dessus est selon cette deuxième réalisation une sous-période d'une période de cumul.

Les étapes de cumuler et comparer sont remplacées par les étapes suivantes :

- cumuler des coûts de communication dans le moyen de notification de dépassement de seuil en un coût par sous-période au fur et à mesure des messages de communication pendant chaque sous-période,
- additionner à une variable somme de coût le coût par sous-période à la fin de ladite chaque sous-période et lui soustraire le coût par sous-période pour ladite sous-période de la période de cumul précédente,
- mémoriser le coût par sous-période à la fin de ladite chaque sous-période, et
- comparer la variable somme de coût audit seuil de coût dans le moyen de notification de dépassement de seuil à l'expiration de ladite chaque sous-période.

La deuxième réalisation est également de préférence complétée pour maîtriser la durée cumulée des communications téléphoniques. Les étapes de cumuler et de comparer sont alors remplacées par les étapes suivantes :

- cumuler des coûts de communication et des durées de communication dans le moyen de notification de dépassement de seuil respectivement en un coût par sous-période et une durée par sous-période au fur et à mesure des messages de communication pendant chaque sous-période,
- additionner à une variable somme de coût le coût par sous-période à la fin de ladite chaque sous-période et lui soustraire le coût par sous-période pour ladite sous-période de la période de cumul précédente,
- additionner à une variable somme de durée la durée par sous-période à la fin de ladite chaque sous-période et lui soustraire la durée par sous-période pour ladite sous-période de la période de cumul précédente,
- mémoriser le coût par sous-période et la durée par sous-période à la fin de ladite chaque sous-période, et
- comparer la variable somme du coût audit seuil de coût et la variable somme de durée audit seuil de durée dans le moyen de notification de dépassement de seuil à l'expiration de ladite chaque sous-période.

L'étape de transmettre un message de notification depuis le moyen de notification de dépassement de seuil au moyen de commutation peut être alors effectuée lorsqu'au moins l'une des variables somme de coût et somme de durée dépasse le seuil respectif à l'expiration de ladite chaque sous-période afin que le dépassement de seuil soit notifié au terminal d'usager par le moyen de commutation, et le procédé revient à l'étape de cumuler à l'expiration de ladite chaque sous-période.

Le nombre de sous-périodes dans une période peut être également sélectionné depuis le terminal d'usager afin de le mémoriser dans le moyen de mémoire du moyen de notification de dépassement de seuil.

Le dépassement de seuil peut être signalé au terminal d'usager par une tonalité spécifique ou un message vocal émis lors d'une prise (décrochage) de ligne téléphonique par le terminal d'usager, et/ou par une notification immédiate consistant en l'allumage d'un voyant ou l'excitation d'un buzzer dans le terminal d'usager si celui-ci est équipé d'un modem. Ces deux types de notification peuvent être demandés simultanément lors du dépassement de seuil ce qui assure quasiment pour tous les états du terminal d'usager ou de disponibilité de l'usager un signalement rapide de ce dépassement.

Selon une réalisation préférée, le moyen de notification de dépassement de seuil comprend des premier et deuxième serveurs. Le premier serveur effectue les étapes de cumuler et comparer.

Le procédé peut comprendre des étapes de transmettre un message de demande de notification comprenant au moins un numéro de premier serveur, un numéro d'usager et au moins un type de notification depuis le premier serveur vers le deuxième serveur dès que le dépassement de l'un des seuils de coût et de durée pendant ladite période, ou selon la réalisation plus complète à l'expiration de ladite chaque sous-période, transmettre un message de notification contenant au moins un numéro de deuxième serveur, le numéro d'usager et une activation du type de notification depuis le deuxième serveur au moyen de commutation en réponse à un message de demande de notification, transmettre un message d'accusé de réception de notification contenant un résultat de réalisation de notification depuis le moyen de commutation au deuxième serveur, et transmettre autant de messages de notification que de messages d'accusé de réception de notification signalant un échec de notification depuis le moyen de commutation vers le terminal d'usager tant que des messages d'accusé de réception de notification signalent un échec de notification pendant une durée prédéterminée ou pour un nombre prédéterminé de messages de notification.

En général, des messages de demande de notification et des messages de notification sont transmis respectivement en réponse à des messages de communication tant que le dépassement de l'un des seuils de coût et de durée par la variable somme respective subsiste pendant la période.

Toutefois, selon la deuxième réalisation, un message de demande de notification et un message de notification sont transmis lorsque le premier serveur constate que la variable somme de coût dépasse le seuil de coût, ou la variable somme de durée dépasse le seuil de durée, à l'expiration de ladite chaque sous-période.

Afin d'éviter des signalements tardifs de franchissement de seuil, un message de demande de désactivation de notification transmis par le premier serveur vers le deuxième serveur peut désactiver une notification précédente à l'expiration de la période prédéterminée, ou bien selon la deuxième réalisation, à l'expiration de chaque sous-période.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un bloc-diagramme d'un système téléphonique pour la mise en oeuvre du procédé selon l'invention ;
- la figure 2 est un algorithme de signalement de dépassement de seuil de coût de communication téléphonique conforme à une première réalisation de l'invention ;
- la figure 3 est un algorithme de signalement de dépassement de seuil de coût de communication téléphonique conforme à une deuxième réalisation de l'invention ;
- la figure 4 est un algorithme de signalement de dépassement de seuils de coût et de durée de communication téléphonique selon la première réalisation de l'invention ;
- la figure 5 est un algorithme de signalement de dépassement de seuils de coût et de durée de communication téléphonique selon la deuxième réalisation de l'invention ;
- la figure 6 est un diagramme temporel de transmission de messages entre un serveur de dépassement de seuil, un serveur de gestion de notification et un autocommutateur ; et
- la figure 7 est un autre diagramme temporel de transmission de messages analogue à la figure 6.

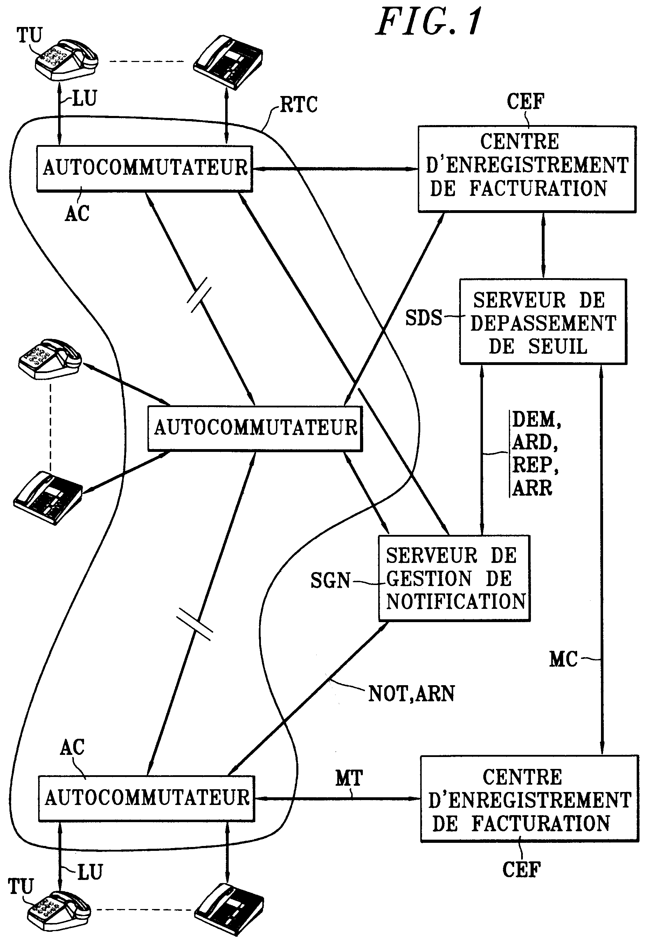

En référence à la figure 1, un système téléphonique pour la mise en oeuvre du procédé de signalement de dépassement de seuil de consommation téléphonique selon l'invention comprend au moins un centre d'enregistrement de facturation CEF, un serveur de dépassement de seuil SDS et un serveur de gestion de notification SGN. Dans la figure 1 sont également représentés plusieurs autocommutateurs numériques de rattachement d'usager AC inclus dans le réseau téléphonique commuté RTC et plusieurs terminaux d'usager TU rattachés respectivement aux autocommutateurs AC. Les terminaux d'usager TU sont reliés aux autocommutateurs AC par des lignes téléphoniques d'usager LU analogiques ou numériques. Les liaisons entre les autocommutateurs AC et les centres d'enregistrement de facturation CEF et le serveur de gestion de notification SGN, ainsi que les liaisons entre le serveur de dépassement de seuil SDS et les centres d'enregistrement de facturation CEF et le serveur de gestion de notification SGN sont de préférence numériques et sont par exemple des liaisons spécialisées, en mode paquets selon la norme X25, ou de type liaison RNIS à 2048 kbit/s avec 30 canaux d'information B et un canal de signalisation D. Un centre d'enregistrement de facturation peut être associé à un ou plusieurs autocommutateurs AC. Selon la réalisation illustrée, plusieurs centres d'enregistrement de facturation CEF sont associés à un serveur de dépassement de seuil SDS et un serveur de gestion de notification SGN.

Un terminal d'usager donné TU est considéré ci-après avec l'autocommutateur de rattachement AC relié à ce terminal et le centre d'enregistrement de facturation CEF relié à l'autocommutateur de rattachement précité.

Comme il est connu, à la fin d'une communication téléphonique entre le terminal d'usager TU en tant que demandeur et un terminal téléphonique demandé quelconque établie par l'autocommutateur de rattachement AC, l'autocommutateur AC transmet un message de taxation MT au centre d'enregistrement de facturation associé CEF. Le message de taxation MT comprend au moins le numéro de l'usager demandeur NU, le numéro du demandé, la date, l'heure et la durée DC de la communication ainsi que le type de service utilisé pour la communication tel qu'un terminal téléphonique classique, une ligne d'usager de type RNIS, ou un radiotéléphone par exemple. Le centre d'enregistrement de facturation CEF traite chaque message de taxation MT de manière à établir ultérieurement la facture de consommation téléphonique de l'usager.

Le centre CEF calcule le coût CC de chaque communication qui est établie selon un algorithme spécifique en fonction du contenu du message de taxation MT.

Il est supposé que l'usager donné localisé au terminal TU a souscrit à un service de dépassement de seuil de consommation téléphonique selon l'invention, cette souscription étant enregistrée dans le centre CEF et le serveur SDS. Le coût CC et le numéro d'usager NU est introduit dans un message de communication MC transmis par le centre CEF au serveur de dépassement de seuil SDS. L'opérateur téléphonique responsable de ce service ayant réservé un emplacement de mémoire de souscription dans le serveur de dépassement de seuil SDS à l'usager donné, le numéro téléphonique de l'usager y est écrit ainsi que d'autres paramètres et résultats de calcul comme on le verra dans la suite.

Selon une première réalisation, le service de dépassement de seuil de consommation téléphonique auquel a souscrit l'usager notifie à l'usager le dépassement d'un seuil de coût prédéterminé SEC tant que la somme des coûts des communications établies au cours d'une période prédéterminée P excède le seuil SEC.

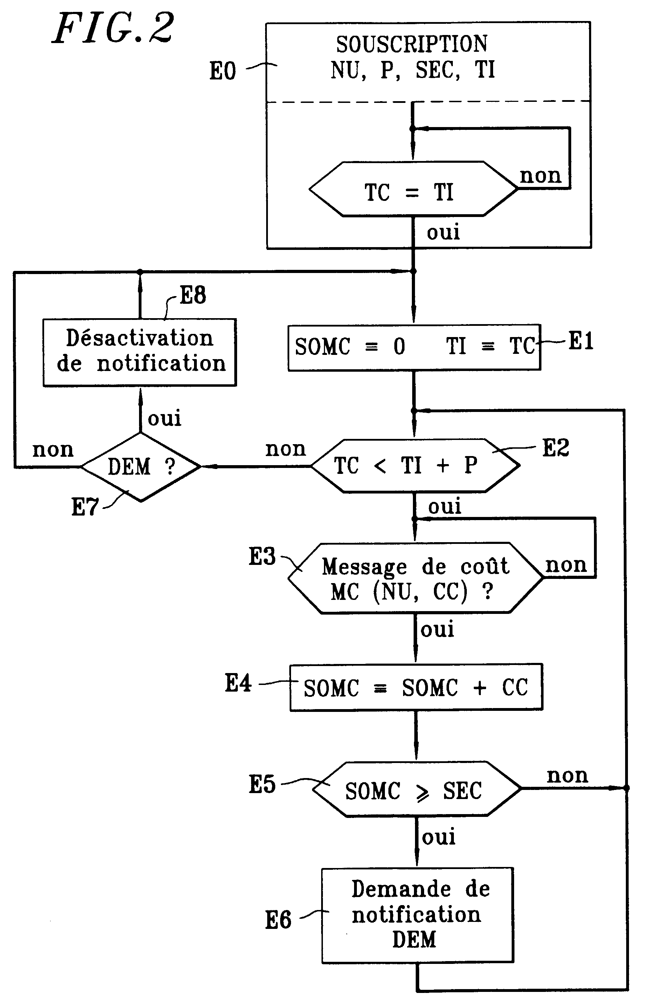

En référence à la figure 2, le procédé de signalement de dépassement de seuil selon la première réalisation comprend une étape préliminaire E0 et huit étapes E1 à E8.

L'étape préliminaire E0 est la préparation du serveur SDS après la souscription de l'usager au service de dépassement de seuil. Le serveur SDS est programmé par exemple afin que le service offert débute juste au début d'une période P à un temps initial TI donné. En général, la période P peut être une semaine, un demi-mois, un mois ou deux mois. Typiquement, la période P selon cette première réalisation est par exemple fixée par l'opérateur téléphonique et correspond à la périodicité des factures envoyées à l'usager ; ainsi la période P peut être une période de deux mois et le temps initial TI peut être le premier jour d'un bimestre.

Dans le serveur SDS, un horodateur produit un temps courant TC qui est exprimé comme le temps initial TI et la période P par exemple en minute et plus précisément en mois, jour, heure et minute. A la première étape E1, lors du déclenchement du service de signalement de dépassement de seuil pour l'usager donné à TI = TC , une variable somme de coût SOMC est mise à zéro.

Tant que le temps courant TC est antérieur à l'expiration TI + P de la période P, comme indiqué à l'étape E2, les étapes suivantes E3, E4 et E5 sont accomplies pour chaque communication téléphonique taxée, établie depuis le terminal d'usager donné TU.

A l'étape E3, le serveur SDS vérifie à la réception d'un message de communication MC établi par le centre CEF que le numéro d'usager NU inclus dans ce message est contenu dans la mémoire de souscription relative aux usagers ayant souscrit au service de signalement de dépassement de seuil. Pour l'usager donné, le coût CC de la dernière communication téléphonique inclus dans le message MC est additionné à la variable SOMC à l'étape E4. Puis la somme de coût de communication SOMC est comparée au seuil de coût prédéterminé SEC, comme indiqué à l'étape E5. Le seuil SEC est choisi par l'usager donné lors de la souscription au service de signalement de dépassement de seuil et est également écrit dans l'emplacement de mémoire réservé à l'usager donné dans le serveur SDS. Si la somme SOMC est inférieure au seuil SEC, le procédé passe de l'étape E5 à l'étape E2. Tant que la somme SOMC est inférieure au seuil SEC pendant la période P, le serveur SDS cumule les coûts des communications. Si le seuil SEC n'est pas franchi par la variable SOMC pendant la période P, la variable SOMC est remise à zéro et le temps initial TI est mis égal au temps courant TC lorsque TC = TI + P , à la fin de la période en cours P, comme indiqué par le passage de l'étape E2 à l'étape E1 à travers une étape de vérification de demande de notification E7 dont la réponse est négative.

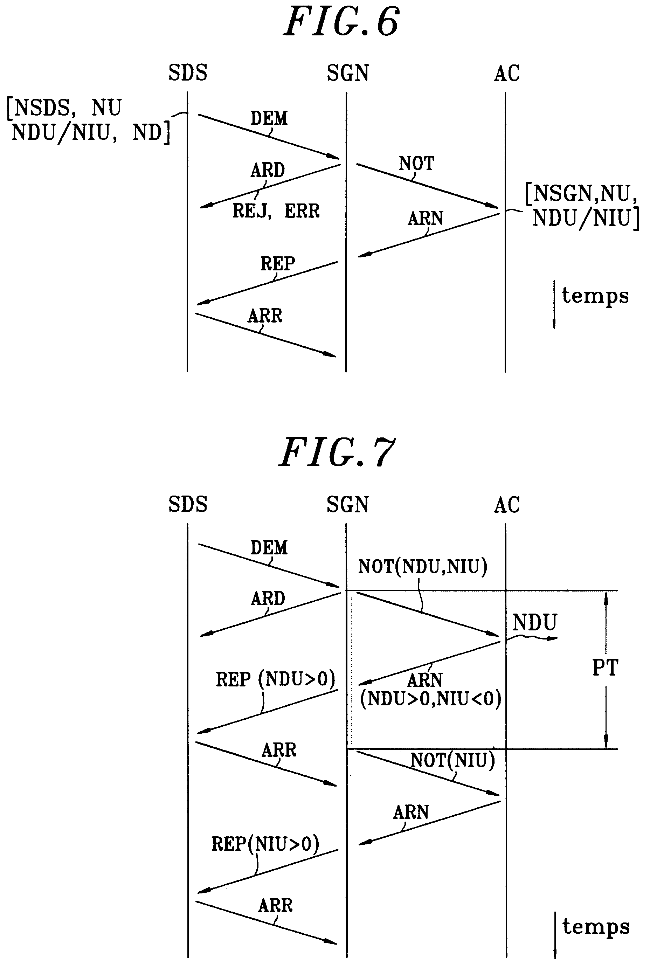

Par contre, comme montré aux étapes E5 et E6, dès que la variable SOMC devient égale ou supérieure au seuil de coût SEC, le serveur de dépassement de seuil SDS envoie un message de demande de notification DEM au serveur de gestion de notification SGN afin que celui-ci envoie une notification de dépassement de seuil au terminal d'usager TU à travers le réseau téléphonique RTC. Les échanges de messages entre le serveur SDS, le serveur SGN et le réseau RTC seront détaillés ultérieurement dans la description en référence aux figures 6 et 7.

Après chaque message de demande de notification à l'étape E6, le procédé revient comme après l'étape E5, à l'étape E2 dans l'attente d'un prochain message de communication pour additionner le coût CC de la prochaine communication à la variable SOMC à l'étape E4. Tant que le temps courant TC est inférieur au temps TI + P à l'étape E2 et tant que la variable SOMC est supérieure au seuil SEC, un message de demande de notification DEM est envoyé par le serveur SDS au serveur SGN en réponse à chaque message de communication MC, c'est-à-dire après chaque communication établie jusqu'à l'expiration de la période P. L'usager est ainsi averti du franchissement du seuil SEC selon au moins l'un des deux types suivants. Selon un premier type, la notification produit une tonalité spécifique dès que l'usager prend la ligne téléphonique associée LU, par exemple lors du décrochage du combiné du terminal TU ou de l'appui sur une touche de prise de ligne sur le clavier du terminal TU. Selon un deuxième type, la notification produit par exemple l'allumage d'un voyant sur le terminal TU. La notification de dépassement de seuil incite l'usager à réduire sa consommation téléphonique pendant le reste de la période P afin que le coût cumulé SOMC des communications téléphoniques pendant la période P reste voisin du seuil SEC.

Lorsque la période P a expiré à l'étape E2, le procédé est dirigé vers l'étape E1 à travers les étapes E7 et E8 afin que le serveur SDS transmette au serveur SGN un message de demande de désactivation de notification pour désactiver une demande de notification antérieure NOT en cours de traitement ou d'attente dans le serveur SGN, relative à l'usager donné.

Si l'usager donné souhaite mettre fin à la souscription du service de signalement de dépassement de seuil de consommation téléphonique, il compose le numéro spécial du serveur SDS sur le clavier du terminal TU. Par exemple par l'intermédiaire d'une messagerie vocale, le serveur appelé SDS enregistre le numéro d'usager NU et un code de désactivation du service après composition de ceux-ci au clavier du terminal TU et codage classique en code DTMF (Dual-Tone Multifrequency). L'algorithme en cours de déroulement selon la figure 2, relatif à l'usager donné est alors arrêté pour revenir à l'étape préliminaire E0, et le serveur de dépassement de seuil SDS transmet un message de demande de désactivation de notification au serveur de gestion de notification SGN de manière à annuler toute notification téléphonique NOT en attente de transmission vers le terminal d'usager TU dans le serveur SGN.

En variante, le terminal TU appelle le serveur SDS afin que l'usager donné programme lui-même, par composition au clavier et suivant des directives données par messagerie vocale, la période P, le temps initial TI de la période P et le seuil SEC, de manière à mieux maîtriser la consommation téléphonique de l'usager par rapport aux dernières factures.

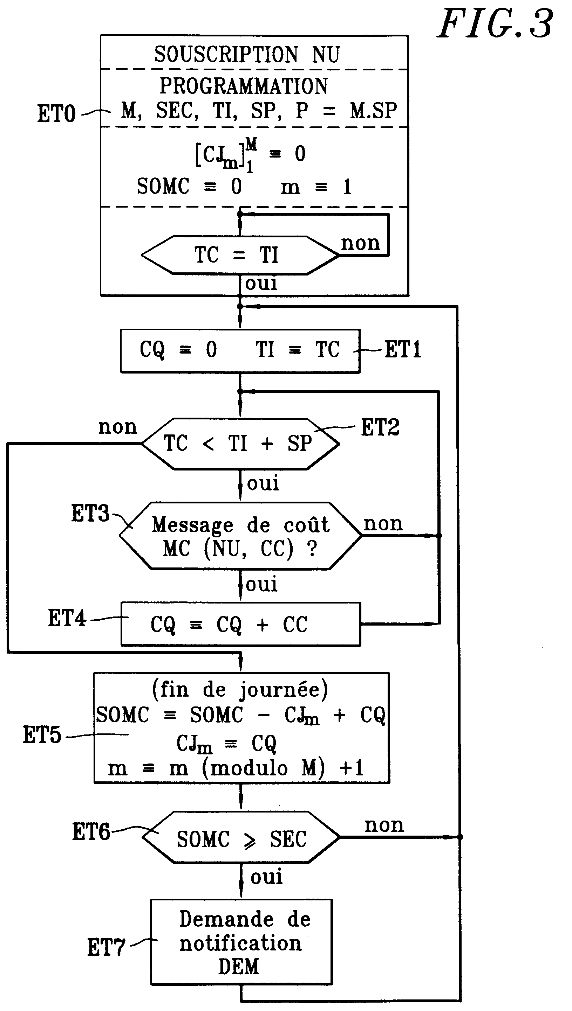

Selon une deuxième réalisation montrée à la figure 3, le franchissement du seuil de coût SEC est signalé par une notification téléphonique au terminal d'usager TU chaque fois que la somme des coûts de communication cumulés pendant M dernières sous-périodes successives SP excède le seuil SEC. La somme des coûts de communication SOMC est remise à jour en fonction de la consommation de la dernière sous-période écoulée. Par exemple, chaque sous-période SP correspond à une journée de 24 heures et l'entier M supérieur ou égal à 1 est égal à 7 pour une période P d'une semaine, ou bien l'entier M varie de 28 à 31 pour une période P d'un mois.

L'emplacement de mémoire de souscription réservé au terminal d'usager TU dans le serveur de dépassement de seuil SDS comprend M cellules mémorisant respectivement les coûts cumulés de consommation téléphonique quotidienne $CJ_1$ à $CJ_M$ pendant M jours successifs. Lors de la première période P de mise en fonctionnement du service de dépassement de seuil pour le terminal d'usager donné TU, la mième cellule de mémoire initialement mise à zéro mémorise, à la fin de la mième sous-période SP, le coût quotidien $CJ_m$ des communications établies pendant le mième jour de la première période P. Puis à la deuxième période P, dans la mième cellule de mémoire est lu le coût quotidien $CJ_m$ de la première période pour le retrancher à une variable de coût de communication SOMC comme on le verra ci-après, et est écrit le cout quotidien $CJ_m$ des communications établies pendant le mième jour de cette deuxième période, et ainsi de suite pendant les périodes suivantes. Selon cet exemple de deuxième réalisation, une variable coût de communication quotidien CQ et la variable somme de coût SOMC sont périodiquement mises à jour respectivement au fur et à mesure des communications au cours de chaque journée et à la fin de chaque journée.

Le procédé selon la deuxième réalisation comprend huit étapes ET0 à ET7.

A l'étape préliminaire ET0, après réservation d'un emplacement mémoire attribué à l'usager donné de numéro NU, les coûts journaliers $CJ_1$ à $CJ_m$ sont mis à zéro, la variable SOMC est mise à zéro, et l'indice m est mis à 1. Cette initialisation est effectuée en réponse à un message transmis par le terminal d'usager TU vers le serveur de dépassement de seuil SDS et comprenant le nombre M, le seuil SEC, le temps initial TI de déclenchement de la surveillance de consommation téléphonique et optionnellement la sous-période SP. La période P au cours de laquelle sont cumulés les coûts de communication quotidiens en une somme SOMC est égale au produit M x SP, M pouvant être adapté automatiquement au nombre de jours contenus dans le mois courant selon cet exemple.

Dès que TC = TI, à l'étape ET1 la variable coût de communication quotidien CQ est mise à zéro et TI est mis égal à TC. L'étape ET1 et les étapes suivantes ET2 à ET4 sont analogues aux étapes E1 à E4.

Si le temps courant TC est antérieur à l'expiration TI + SP de la sous-période en cours à l'étape ET2, alors un message de communication MC transmis par le centre d'enregistrement de facturation CEF associé à l'autocommutateur de rattachement du terminal d'usager TU est validé par le serveur de dépassement de seuil SDS lorsque le numéro d'usager NU est reconnu à l'étape ET3. Le coût CC de la dernière communication établie demandée par le terminal d'usager TU, contenu dans le message MC est additionné au coût quotidien CQ à l'étape ET4. Comme indiqué à l'étape ET2, tant que la sous-période en cours SP, ici de 24 heures, n'est pas complètement écoulée, la variable CQ cumule les coûts de communication CC pendant la sous-période en cours SP.

Si le temps courant TC devient égal à TI + SP à la fin de la sous-période en cours, c'est-à-dire à la fin de la journée en cours, l'étape ET5 est effectuée. La somme SOMC est mise à jour en y additionnant le coût de communication CQ cumulé pendant cette dernière journée, et en lui soustrayant le coût journalier $CJ_m$ qui a été mémorisé dans la cellule de rang m après le mième jour de la période précédente. A l'étape ET5, le coût journalier $CJ_m$ est mis égal au coût quotidien CQ, en effaçant le coût $CJ_m$ de la période précédente P dans la cellule de mémoire de rang m, et l'indice m modulo M est incrémenté d'une unité.

La somme SOMC égale à SOMC - $CJ_m$ + CQ est comparée au seuil SEC à l'étape suivante ET6.

Si la somme SOMC est inférieure au seuil SEC, l'étape ET1 est de nouveau effectuée pour calculer le coût cumulé quotidien CQ des communications établies par le terminal d'usager TU pendant la sous-période (journée) suivante. Par contre, si la somme SOMC a franchi le seuil SEC, le serveur de dépassement de seuil SDS transmet une demande de notification DEM au serveur de gestion de notification SGN à l'étape ET7 afin de signaler au terminal d'usager TU à travers le réseau téléphonique RTC que la consommation téléphonique pendant les M dernières sous-périodes (journées) était supérieure au seuil SEC sélectionné par l'usager. Après l'étape ET7, l'étape ET1 est effectuée pour de nouveau calculer le coût cumulé quotidien CQ pendant la prochaine sous-période, ici la prochaine journée, et la somme SOMC cumulée pendant les M-1 jours précédents et la prochaine journée.

Si à la fin de la sous-période (journée) suivante, la variable SOMC redevient inférieure au seuil SEC, une désactivation de notification peut être prévue entre les étapes ET6 et ET1 pour désactiver toute demande de notification antérieure DEM en cours de traitement ou d'attente dans le serveur de gestion de notification SGN, d'une manière analogue à la combinaison des étapes E7 et E8 montrées à la figure 2.

L'usager suit ainsi sa consommation téléphonique qui est lissée à chaque sous-période SP, quotidiennement selon cet exemple. Si la notification de dépassement de seuil persiste pendant quelques jours, l'usager devra réduire sa consommation téléphonique.

En variante, lorsque SP est sensiblement égal à zéro, à la minute près par exemple, la somme SOMC est mise à jour quasiment à chaque communication téléphonique établie depuis le terminal d'usager donné TU, chaque cellule de rang m mémorise le coût $CJ_m$ quasiment au plus d'une communication, et la somme SOMC représente la consommation téléphonique quasiment des dernières communications en nombre inférieur à M.

Selon une autre variante, si l'usager donné fixe un seuil SEC à ne pas dépasser pour chaque communication, il suffit de programmer M = 1 et SP ≈ 0.

Selon encore une autre variante, si l'usager donné fixe le paramètre M à 1, chaque sous-période SP est équivalente à une période P selon la première réalisation (figure 2).

Selon des réalisations plus complètes du procédé de l'invention, le serveur de dépassement de seuil SDS signale également le dépassement d'un deuxième seuil de consommation téléphonique exprimé en durée, soit un seuil de durée de communication SED inférieur à la période P. Chaque message de communication MC transmis par le centre d'enregistrement de facturation CEF contient également la durée DC de la communication venant d'être rompue, relative à l'usager donné. Le seuil SEC, la durée DC et d'autres paramètres ou variables ajoutées telles que SOMD sont exprimées en heure, minute et seconde.

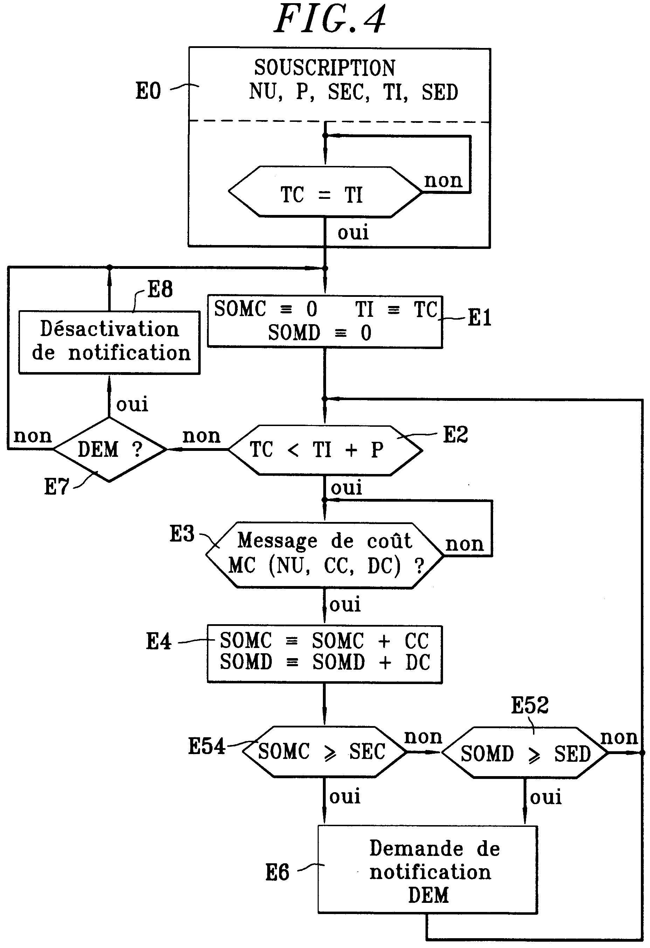

La figure 4 montre des adjonctions pour compléter la première réalisation montrée à la figure 2.

A l'étape préliminaire E0, le seuil de durée SED est imposé par l'opérateur, ou choisi de préférence par l'usager donné et écrit dans l'emplacement de mémoire réservé à l'usager donné dans le serveur SDS. A l'étape E1, une variable somme de durée SOMD est mise à zéro.

A l'étape E3, chaque message MC reçu par le serveur SDS contient non seulement le numéro d'usager NU et le coût CC de la dernière communication téléphonique mais également la durée DC de cette dernière communication. A l'étape E4, la durée DC incluse dans le dernier message reçu MC est additionnée à la variable SOMD, simultanément au cumul du coût CC inclus dans le message MC dans la variable SOMC.

L'étape de comparaison suivant l'étape E4 est composée de deux étapes E51 et E52, pour comparer respectivement la somme de coût de communication SOMC au seuil de coût SEC et la somme de durée de communication SOMD au seuil de durée SED. Tant que les sommes SOMC et SOMD sont respectivement inférieures aux seuils SEC et SED pendant la période P, le serveur SDS cumule les coûts et durées des communications, les sommes SOMC et SOMD étant remises à zéro à l'étape E1 à la fin TC = TI + P de la période P (étapes E2 et E7 : non).

Par contre, dès que la variable somme de coût SOMC est égale ou supérieure au seuil SEC à l'étape E51, ou dès que la variable somme de durée SOMD est égale ou supérieure au seuil SED à l'étape E52, le serveur SDS émet un message de demande de notification DEM au serveur de gestion de notification SGN. L'usager donné est ainsi averti du franchissement d'au moins l'un des deux seuils SEC et SED.

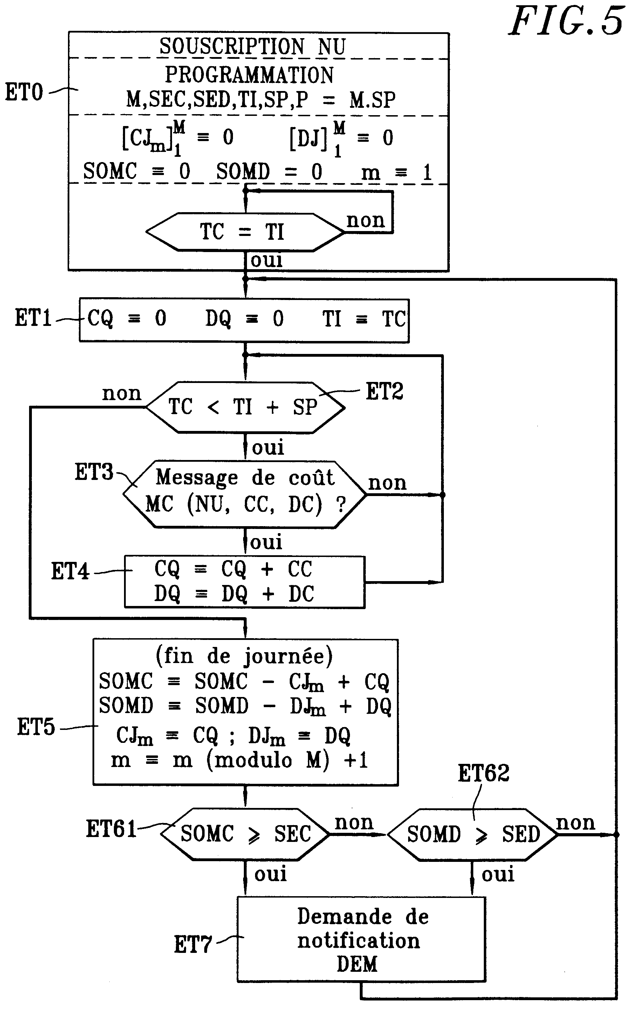

La figure 5 montre des adjonctions pour compléter la deuxième réalisation du procédé de l'invention montrée à la figure 3. Ces adjonctions sont relatives au seuil SED inférieur à la période P et mémorisé avec le seuil SEC à l'étape ET0 et à la variable somme de durée SOMD qui, comme la variable SOMC, est mise à zéro à l'étape ET0 et qui est comparée au seuil de durée SED à une étape ET62, d'une manière analogue à la première réalisation plus complète montrée à la figure 4. Des adjonctions dans la figure 5 concernent en outre des durées de communication téléphonique $DJ_1$ à $DJ_M$ cumulées pendant M sous-périodes ou jours successifs respectivement et une variable durée de communication quotidienne DQ qui ont des rôles similaires aux variables de coût $CJ_1$ à $CJ_M$ et CQ. Les M cellules mémorisant respectivement les coûts cumulés de consommation téléphonique quotidienne $CJ_1$ à $CJ_M$ dans l'emplacement de mémoire de souscription réservé au terminal d'usager TU dans le serveur de dépassement de seuil SDS mémorisent également les durées cumulées des communications journalières $DJ_1$ à $DJ_M$ pendant M jours successifs.

A l'étape préliminaire ET0, après réservation de l'emplacement mémoire attribué à l'usager donné de numéro NU, les durées journalières $DJ_1$ à $DJ_M$ et la somme SOMD sont également mises à zéro. Cette initialisation est effectuée en réponse à un message transmis par le terminal d'usager TU vers le serveur de dépassement de seuil SDS comprenant en outre le seuil de durée SED.

Dès que TC = TI , la variable de durée de communication quotidienne DQ comme la variable CQ est mise à zéro à l'étape ET1.

En réponse à un message de communication validé MC transmis par le centre d'enregistrement de facturation CEF à l'étape ET3, la durée DC de la dernière communication établie demandée par le terminal d'usager TU, contenue dans le message MC est additionnée à la durée quotidienne DQ à l'étape ET4, comme pour cumuler le coût CQ. Tant que la sous-période en cours SP n'est pas complètement écoulée, les variables CQ et DQ cumulent respectivement les coûts et durées de communication CC et DC pendant la sous-période en cours SP.

A l'étape ET5, la somme de durée SOMD est mise à jour, comme la mise à jour de la somme de coût SOMC, en y additionnant la durée de communication CQ cumulé pendant la dernière journée écoulée, et en lui soustrayant la durée journalière $DJ_M$ qui a été mémorisée dans la cellule de rang m après le mième jour de la période précédente. Egalement à l'étape ET5, la durée journalière $DJ_m$ est mise égale à la durée quotidienne DQ, en effaçant la durée $DJ_m$ de la période précédente P dans la cellule de mémoire de rang m, avant que l'indice m modulo M soit incrémenté d'une unité.

L'étape ET6 de la figure 3 est remplacée par deux étapes analogues ET61 et ET62 dans la figure 5. A l'étape ET61, la somme SOMC égale à $SOMC - CJ_m + CQ$ est comparée au seuil de coût SEC, et à l'étape ET62 la somme SOMD égale à $SOMD - DJ_m + DQ$ est comparée au seuil de durée SED.

Si la somme SOMC est inférieure au seuil SEC, et la somme SOMD est inférieure au seuil SED, l'étape ET1 est de nouveau effectuée pour calculer les coût et durée cumulés quotidiens CQ et DQ des communications établies par le terminal d'usager TU pendant la journée suivante. Par contre, si la somme SOMC a franchi le seuil SEC ou bien la somme SOMD a franchi le seuil SED, le serveur de dépassement de seuil SDS transmet une demande de notification DEM au serveur de gestion de notification SGN à l'étape ET7 afin de signaler au terminal d'usager TU à travers le réseau téléphonique RTC que la consommation téléphonique exprimée en coût et/ou en durée pendant les M derniers jours était supérieure à au moins l'un des seuils SEC et SED sélectionnés par l'usager. Après l'étape ET7, le procédé revient à l'étape ET1.

Si à la fin de la sous-période (journée) suivante, les deux variables SOMC et SOMD sont inférieures respectivement aux seuils SEC et SED, une désactivation de notification peut être prévue entre les étapes ET62 et ET1 pour désactiver toute demande de notification antérieure DEM en cours de traitement ou d'attente dans le serveur de gestion de notification SGN, d'une manière analogue à la combinaison des étapes E7 et E8 montrées à la figure 2 ou 4.

Le franchissement de l'un des seuils SEC et SED est ainsi signalé par une notification téléphonique au terminal d'usager TU chaque fois que l'une des somme de coût de communication SOMC et somme de durée de communication SOMD cumulées pendant M dernières sous-périodes successives SP excède le seuil respectif SEC, SED. L'usager peut alors suivre sa consommation téléphonique en coût et durée qui est lissée à chaque sous-période SP.

Comme déjà dit, une notification de dépassement de seuil est signalée au terminal d'usager TU selon l'un des ou les deux types suivants.

- Pour le premier type, la notification est une notification différée d'usager NDU correspondant à une tonalité spécifique émise depuis l'autocommutateur téléphonique de rattachement AC lors de la prise (décrochage) de la ligne LU par le terminal d'usager TU en réponse à un message de notification NOT contenant une notification NDU établie par le serveur de gestion de notification SGN ; en variante, la tonalité spécifique peut être remplacée par un message vocal explicatif fourni par un synthétiseur vocal inclus dans l'autocommutateur AC.
- Pour le deuxième type, la notification est une notification immédiate d'usager NIU correspondant à l'allumage d'un voyant, par exemple une diode électroluminescente LED ou un icône sur un écran, et/ou à l'excitation d'un buzzer dans le terminal d'usager TU, commandés par l'autocommutateur de rattachement AC du terminal d'usager TU en réponse à un message de notification NOT contenant une notification NIU établie par le serveur de gestion de notification SGN, si le terminal d'usager TU est équipé d'un modem, typiquement supportant le protocole V23.

Lors de la souscription de l'usager au service de dépassement de seuil de consommation téléphonique, l'usager indique son choix entre ces deux types de notification, ou à la fois pour ces deux types de notification.

La figure 6 montre un diagramme temporel des principaux messages échangés entre les serveurs SDS et SGN, par exemple à travers une liaison de type X25 et TCP/IP, et entre le serveur SGN et l'autocommutateur AC de rattachement du terminal d'usager TU à travers le réseau téléphonique RTC.

Le premier serveur SDS émet un message de demande de notification DEM vers le deuxième serveur SGN en réponse à un dépassement du seuil de coût SEC par la variable somme de coût SOMC ou un dépassement du seuil de durée SED par la variable somme de durée SOMD. Lors d'un fonctionnement normal, le serveur SGN émet un message de NOTification NOT vers l'autocommutateur téléphonique AC rattaché au terminal d'usager donné TU et un message d'Accusé de Réception de Demande de notification ARD après validation de la demande de notification. L'autocommutateur AC émet un message d'Accusé de Réception de Notification ARN après avoir tenté d'établir le type de notification spécifié dans le message de notification NOT, et le serveur SGN retranscrit ce message d'accusé de réception de notification ARN en un message de REPonse REP transmis vers le serveur SDS qui en accusera réception par un message d'Accusé de Réception de Réponse ARR.

Une demande de notification DEM émise par le serveur de dépassement de seuil SDS à l'étape E6 ou ET7 lorsque la variable somme de coût SOMC est supérieure au seuil de coût SEC ou lorsque la variable somme de durée SOMD est supérieure au seuil de durée SED, est destinée à activer une notification au profit de l'usager donné dans le serveur SGN. Le message de demande de notification DEM comprend un numéro d'appel NSDS du serveur SDS, le numéro téléphonique d'usager NU, le type de notification demandé NDU ou NIU, et un numéro d'ordre ND de la demande de notification de manière à ce que le serveur SGN émette les notifications correspondantes suivant leur ordre d'arrivée en cas d'encombrement. A la réception d'un message de demande de notification DEM, le serveur de gestion de notification SGN vérifie la conformité du message reçu avec le protocole d'échange de messages entre les serveurs SDS et SGN et l'habilitation du serveur SDS à émettre un tel message en vérifiant le numéro NSDS du serveur SDS contenu dans le message DEM, le serveur de gestion de notification SGN pouvant être en pratique relié à plusieurs serveurs de dépassement de seuil et/ou plusieurs serveurs relatifs à d'autres services. Si le message reçu DEM n'est pas conforme, le serveur SGN émet un message de rejet REJ ou bien un message d'erreur ERR vers le serveur SDS. Si le serveur SDS n'est pas reconnu par le serveur SGN, un message d'accusé de réception de demande négatif ARD est émis par le serveur SGN.

Le serveur SGN mémorise dans une cellule mémoire attribuée au numéro d'usager NU le type de notification NDU et/ou NIU ainsi que la date et l'heure de la demande de notification et le numéro d'appel NSDS du serveur SDS. Après cette mémorisation, le serveur SGN émet un message d'accusé de réception de demande positif ARD pour signaler au serveur SDS la prise en compte de la demande de notification DEM. Le message ARD signale en cas d'une demande de notification comprenant les deux types de notification NDU et NIU, la prise en compte des deux types de notification si ceux-ci nécessitent l'envoi de deux messages respectifs NOT, ou bien d'un unique message NOT pour les deux types de notification, vers l'autocommutateur AC.

Un message de notification NOT émis par le serveur SGN en réponse à une demande de notification DEM mémorisée contient le numéro d'appel NSGN du serveur SGN afin que l'autocommutateur AC puisse le rappeler, le numéro NU de l'usager à notifier, et le type d'action, en l'occurrence une activation, du type de notification NDU ou NIU. En réponse au message NOT, l'autocommutateur AC tente de formaliser la notification demandée vers le terminal d'usager TU à travers la ligne d'usager LU. Si la tonalité spécifique est transmise au terminal d'usager en réponse à une prise de la ligne LU par le terminal d'usager TU avant l'expiration d'un laps de temps prédéterminé après la réception du message de notification NOT contenant au moins le type de notification NDU, ou si le terminal d'usager a accusé réception par exemple de l'allumage d'un voyant pendant la durée prédéterminée à la suite d'un message de notification NOT contenant au moins le type de notification NIU, l'autocommutateur AC envoie un message d'accusé de réception de notification positif ARN vers le serveur SGN.

Le serveur SGN avertit le serveur SDS du succès ou non de la demande de notification dans au moins un message de réponse REP. Le message de réponse contient le numéro d'usager NU et le résultat de la notification établie par l'autocommutateur AC, spécifié dans le message ARN, c'est-à-dire si l'action de transmission de notification de type NDU et/ou NIU indiquée dans le message de notification NOT a été réalisée ou non par l'autocommutateur AC. Dans le cas où la demande de notification concerne à la fois les deux types de notification NDU et NIU, les résultats des deux actions correspondantes peuvent être groupés dans un même message de réponse REP, si ces deux actions sont connues au même instant. Dans le cas contraire, les résultats de ces actions sont indiqués dans deux messages de réponse REP différents.

Lorsque le serveur SGN n'envoie pas de message de notification NOT vers l'autocommutateur AC en réponse à un message de demande de notification DEM, le serveur SGN répond immédiatement au serveur SDS soit par un message ARD dans le cas d'une erreur pour laquelle l'acquittement du serveur SDS par un message ARR n'est pas nécessaire, telle qu'un manque de ressource du serveur SGN, ou une inaccessibilité de l'autocommutateur AC par le serveur SGN, soit par un message de réponse REP contenant la cause de l'échec. Cet échec résulte par exemple d'une demande de désactivation ou d'annulation d'une notification non activée dans le serveur SGN pour l'usager donné ou bien d'un type de notification contenu dans la demande DEM inconnu par le serveur SGN ou incohérent avec une demande de notification précédente.

Au niveau de l'autocommutateur AC, la cause d'un échec de la notification NOT est notamment due à un échec de l'appel de l'autocommutateur par le serveur SGN, à une erreur dans le message NOT, à un échec de la notification de type NIU lorsque le terminal d'usager TU est occupé, à un échec de la notification de type NDU et/ou NIU lorsque la ligne d'usager LU est encombrée, ou bien encore à un manque de ressource dans l'autocommutateur. En réponse à un signal d'accusé de réception de notification négatif ARN, le serveur SGN signale l'échec de la notification par un signal de réponse REP au serveur SDS et tentera de nouveau d'émettre une notification NOT vers l'autocommutateur AC. Le nombre de tentatives de transmission de message de notification NOT vers l'autocommutateur de manière à réaliser positivement la notification demandée est limité à un nombre prédéterminé. Un message de notification NOT est transmis par période prédéterminée de tentative PT, par exemple toutes les heures pendant 24 heures, ou quatre fois par jour pendant une semaine, tant qu'un message d'accusé de réception de notification positif ARM n'est pas reçu.

A titre d'exemple, la figure 7 montre un diagramme temporel relatif à une demande de notification DEM qui comprend à la fois une activation de notification de type NDU et une activation de notification de type NIU, et relatif à deux tentatives de transmission de message de notification. Dans le serveur SGN, la validation des activations de notification sont signalées par un message d'accusé de réception positif ARD indiquant la prise en compte de l'activation de la notification demandée. Le serveur SGN émet un message de notification comprenant à la fois les types de notification NDU et NIU. Selon cet exemple, la notification de type NDU correspondant à l'émission d'une tonalité lors de la prise de ligne par le terminal TU a été effectuée avec succès tandis que la notification immédiate NIU n'a pu être effectuée à cause de l'occupation du terminal d'usager donné TU.

Le message d'accusé de réception de notification ARN établi par l'autocommutateur AC indique le succès de la notification de type NDU et l'échec de la notification de type NIU au serveur SGN. En réponse, le serveur SGN émet un message de réponse REP seulement positif pour la notification de type NDU. Le serveur SDS accuse réception du message REP par un message d'accusé de réception de réponse ARR.

Après une période prédéterminée PT succédant à l'émission du message de notification NOT et au cours de laquelle un message ARN partiellement négatif a été reçu, le serveur SGN émet de nouveau un message de notification NOT mais ne contenant qu'une notification de type NIU. Par exemple, si la ligne d'usager LU n'est plus encombrée ou si le terminal d'usager TU n'est plus occupé, l'autocommutateur AC notifie avec succès la notification immédiate de type NIU au terminal d'usager TU, et confirme la réalisation de cette deuxième notification par un message d'accusé de réception positif ARN au serveur SGN, qui à son tour confirme le succès de cette deuxième notification par un message de réponse REP au serveur SDS qui en accusera réception par un message ARR.

Selon d'autres variantes, chaque message de demande de notification DEM contient un bit pour indiquer si la demande de notification résulte d'un dépassement du seuil de coût SEC ou d'un dépassement du seuil de durée SED, et en correspondance, le message de notification NOT contient également ce bit afin que l'autocommutateur AC auquel est rattaché le terminal d'usager donné TU, notifie l'une respective de deux tonalités spécifiques pour une notification différée, ou l'allumage de l'un respectif de deux voyants ou l'un respectif de deux clignotements ou couleurs d'un voyant si la notification est immédiate.

Lorsqu'un message de demande de désactivation de notification qui normalement contient les numéros NSDS et NU, le numéro d'ordre et le type de la notification précédente est émis par le serveur de dépassement de seuil SDS à l'étape E8 (figure 2 ou 4), ou le cas échéant entre les étapes ET6 et ET1 (figure 3) ou les étapes ET62 et ET1 (figure 5), le serveur SGN :

- soit désactive la notification NOT en cours de traitement, ou en attente d'émission par exemple à cause d'un manque de ressource de l'autocommutateur, ou déjà rejetée sans succès par période PT, et envoie un message de réponse REP au serveur SDS, lorsqu'une demande de notification NOT a été effectivement validée par suite du dépassement du seuil SEC par la variable SOMC ou du seuil SED par la variable SOMD,
- soit envoie vers le serveur SDS un message de rejet REJ contenant une cause de notification inconnue lorsqu'aucune notification active n'a été validée pendant la période P (figure 2 ou 4), ou la sous-période SP (figure 3 ou 5) précédente, au cours de laquelle la variable SOMC n'a pas excédé le seuil SEC ou la variable SOMD n'a pas excédé le seuil SED.

Lorsque la notification à désactiver est du type à activation immédiate NIU, le serveur SGN envoie un message de notification NOT à l'autocommutateur AC desservant le terminal d'usager donné TU pour désactiver la notification précédemment en cours d'établissement dans l'autocommutateur AC.

**Revendications**

1. Procédé pour signaler un dépassement de seuil de consommation téléphonique à un terminal d'usager (TU) relié à un moyen de commutation téléphonique (AC) qui transmet un message de taxation (MT) après chaque communication téléphonique depuis le terminal d'usager à un moyen de facturation de consommation téléphonique (CEF) qui calcule le coût (CC) de la communication en fonction du contenu du message de taxation, caractérisé en ce qu'il comprend les étapes suivantes :

- fournir un moyen de notification de dépassement de seuil (SDS, SGN) pouvant communiquer avec le moyen de facturation (CEF) et le moyen de commutation (AC),
- transmettre (E3 ; ET3) des messages de communication (MC) incluant des coûts de communication calculés (CC) depuis le moyen de facturation (CEF) vers le moyen de notification de dépassement de seuil respectivement en réponse aux messages de taxation (MT),

- cumuler (E4 ; ET4) les coûts de communication (CC) dans le moyen de notification de dépassement de seuil (SDS, SGN) en une variable somme de coût (SOMC ; SOMC = CQ) au fur et à mesure des messages de communication (MC) pendant une période prédéterminée (P ; SP, M = 1),
- comparer (E5 ; ET6) la variable somme de coût à un seuil de coût prédéterminé (SEC) dans le moyen de notification de dépassement de seuil (SDS, SGN) en réponse à chaque message de communication (MC),
- transmettre (E6 ; ET7) un message de notification (NOT) depuis le moyen de notification de dépassement de seuil (SDS, SGN) au moyen de commutation (AC) dès que la variable somme de coût (SOMC) dépasse ledit seuil de coût (SEC) pendant ladite période (P ; SP, M = 1) afin que ce dépassement de seuil soit notifié au terminal d'usager (TU) par le moyen de commutation (AC), et
- réitérer les étapes de cumuler, comparer et transmettre à l'expiration de chaque période prédéterminée.

2. Procédé conforme à la revendication 1, comprenant la réservation d'un moyen de mémoire dans le moyen de notification de dépassement de seuil (SDS, SGN) pour le terminal d'usager (TU) afin d'y mémoriser un numéro d'usager (NU), et de pouvoir y mémoriser au moins l'un des paramètres suivants : la période prédéterminée (P), le seuil de coût (SEC) et un temps initial (TI) de la période prédéterminée.

3. Procédé conforme à la revendication 2, comprenant préalablement à tout déroulement de période prédéterminée, une étape (E0) de sélectionner au moins l'un desdits paramètres (P, SEC, TI) depuis le terminal d'usager (TU) et une mémorisation dudit au moins un paramètre sélectionné dans le moyen de mémoire.

4. Procédé conforme à l'une quelconque des revendications 1 à 3, selon lequel chaque message de communication (MC) inclut le coût (CC) et la durée d'une communication et les étapes de cumuler, comparer et transmettre sont remplacées par les étapes de :

- cumuler (E4 ; ET4) les coûts de communication (CC) et les durées de communication (DC) dans le moyen de notification de dépassement de seuil (SDS, SGN) respectivement en une variable somme de coût (SOMC ; SOMC = CQ) et une variable somme de durée (SOMD ;

SOMD = DQ) au fur et à mesure des messages de communication (MC) pendant une période prédéterminée (P ; SP, M = 1),

- comparer (E51, E52 ; ET61, ET62) la variable somme de coût à un seuil de coût prédéterminé (SEC) et la variable somme de durée à un seuil de durée prédéterminé (SED) dans le moyen de notification de dépassement de seuil (SDS, SGN) en réponse à chaque message de communication (MC), et
- transmettre (E6 ; ET7) un message de notification (NOT) depuis le moyen de notification de dépassement de seuil (SDS, SGN) au moyen de commutation (AC) dès que l'une des variables somme de coût (SOMC) et somme de durée (SOMD) dépasse le seuil respectif (SEC, SED) pendant ladite période (P ; SP, M = 1) afin qu'un dépassement de seuil soit notifié au terminal d'usager (TU) par le moyen de commutation (AC).

5. Procédé conforme à la revendication 4, lorsqu'elle dépend de la revendication 2 ou 3, selon lequel lesdits paramètres incluent le seuil de durée (SED).

6. Procédé conforme à l'une quelconque des revendications 1 à 3, selon lequel ladite période prédéterminée est une sous-période (SP, m) d'une période de cumul (P), et les étapes de cumuler et de comparer sont remplacées par les étapes suivantes :

- cumuler (ET4) des coûts de communication (CC) dans le moyen de notification de dépassement de seuil (SDS, SGN) en un coût par sous-période (CQ) au fur et à mesure des messages de communication (MC) pendant chaque sous-période (SP, m),
- additionner (ET5) à une variable somme de coût (SOMC) le coût par sous-période (CQ) à la fin de ladite chaque sous-période (SP, m) et lui soustraire le coût par sous-période ($CJ_m$) pour ladite sous-période de la période de cumul précédente (P),
- mémoriser le coût par sous-période ($CJ_m$ = CQ) à la fin de ladite chaque sous-période, et
- comparer (ET6) la variable somme de coût audit seuil de coût (SEC) dans le moyen de notification de dépassement de seuil (SDS, SGN) à l'expiration de ladite chaque sous-période.

7. Procédé conforme à la revendication 4 ou 5, selon lequel ladite période prédéterminée est une sous-période (SP, m) d'une période de cumul (P), et les étapes de cumuler et de comparer sont remplacées par les étapes suivantes :

- cumuler (ET4) des coûts de communication (CC) et des durées de communication (DC) dans le moyen de notification de dépassement de seuil (SDS, SGN) respectivement en un coût par sous-période (CQ) et une durée par sous-période (DQ) au fur et à mesure des messages de communication (MC) pendant chaque sous-période (SP, m),

- additionner (ET5) à une variable somme de coût (SOMC) le coût par sous-période (CQ) à la fin de ladite chaque sous-période (SP, m) et lui soustraire le coût par sous-période ($CJ_m$) pour ladite sous-période de la période de cumul précédente (P),

- additionner (ET5) à une variable somme de durée (SOMD) la durée par sous-période (DQ) à la fin de ladite chaque sous-période (SP, m) et lui soustraire la durée par sous-période ($DJ_m$) pour ladite sous-période de la période de cumul précédente (P),

- mémoriser le coût par sous-période ($CJ_m$ = CQ) et la durée par sous-période ($DJ_m$ = DQ) à la fin de ladite chaque sous-période, et

- comparer (ET6) la variable somme du coût audit seuil de coût (SEC) et la variable somme de durée audit seuil de durée (SED) dans le moyen de notification de dépassement de seuil (SDS, SGN) à l'expiration de ladite chaque sous-période.

8. Procédé conforme à la revendication 6 ou 7 lorsqu'elle dépend au moins de la revendication 3, selon lequel l'étape de sélectionner (ET0) comprend une sélection du nombre (M) de sous-périodes (SP) dans une période (P) depuis le terminal d'usager (TU) et une mémorisation du nombre de sous-périodes sélectionné dans le moyen de mémoire.

9. Procédé conforme à l'une quelconque des revendications 1 à 8, selon lequel ledit dépassement de seuil est signalé au terminal d'usager (TU) par une tonalité spécifique (NDU) ou un message vocal émis lors d'une prise de ligne téléphonique (LU) par le terminal d'usager, et/ou par une notification immédiate (NIU) consistant en l'allumage d'un voyant ou l'excitation d'un buzzer dans le terminal d'usager (TU) si celui-ci est équipé d'un modem.

10. Procédé conforme à l'une quelconque des revendications 1 à 9, selon lequel ledit moyen de notification de dépassement de seuil (SDS, SGN) comprend des premier et deuxième serveurs, le premier serveur (SDS) effectuant les étapes de cumuler et comparer, et le procédé comprenant des étapes de transmettre un message de demande de notification (DEM) comprenant au moins un numéro de premier serveur (NSDS), un numéro d'usager (NU) et au moins un type de notification (NDU et/ou NIU) depuis le premier serveur (SDS) vers le deuxième serveur (SGN) dès ledit dépassement de seuil (SEC, SED) pendant ladite période (P ; SP), transmettre un message de notification (NOT) contenant au moins un numéro de deuxième serveur (NSGN), le numéro d'usager (NU) et une activation du type de notification (NDU et/ou NIU) depuis le deuxième serveur (SGN) au moyen de commutation (AC) en réponse à un message de demande de notification, transmettre un message d'accusé de réception de notification (ARN) contenant un résultat de réalisation de notification depuis le moyen de commutation (AC) au deuxième serveur (SGN), et transmettre autant de messages de notification (NOT) que de messages d'accusé de réception de notification (ARN) signalant un échec de notification depuis le moyen de commutation (AC) vers le terminal d'usager (TU) tant que des messages d'accusé de réception de notification (ARN) signalent un échec de notification pendant une durée prédéterminée ou pour un nombre prédéterminé de messages de notification.

11. Procédé conforme à la revendication 10, selon lequel des messages de demande de notification (DEM) et des messages de notification (NOT) sont transmis respectivement en réponse à des messages de communication (MC) tant que ledit dépassement de seuil (SEC, SED) subsiste pendant la période (P ; SP).

12. Procédé conforme à la revendication 10, lorsqu'elle dépend de la revendication 6 ou 7, selon lequel un message de demande de notification (DEM) et un message de notification (NOT) sont transmis lorsque ledit dépassement de seuil (SEC, SED) est constaté à l'expiration de ladite chaque sous-période (SP) par le premier serveur (SDS).

13. Procédé conforme à l'une quelconque des revendications 10 à 12, comprenant les étapes de transmettre un message de demande de désactivation de notification depuis le premier serveur (SDS) vers le deuxième serveur (SGN) pour désactiver une notification précédente (NOT) à l'expiration de la période prédéterminée (P ; SP).

## *FIG.1*

TU

LU

RTC

CEF

AUTOCOMMUTATEUR

CENTRE
D'ENREGISTREMENT
DE FACTURATION

AC

SDS

SERVEUR DE
DEPASSEMENT
DE SEUIL

AUTOCOMMUTATEUR

DEM,
ARD,
REP,
ARR

SERVEUR DE
GESTION DE
NOTIFICATION

SGN

MC

NOT,ARN

AC

MT

AUTOCOMMUTATEUR

CENTRE
D'ENREGISTREMENT
DE FACTURATION

LU

CEF

TU

# FIG.2

```
                              SOUSCRIPTION
E0 ─┐                         NU, P, SEC, TI
    └───────────────────────────────────────────
                              ┌──────────────┐
                              │   TC = TI    │── non
                              └──────────────┘
                                    oui
```

E8 — Désactivation de notification

SOMC = 0    TI = TC — E1

DEM ?  — E7

TC < TI + P — E2

Message de coût MC (NU, CC) ? — E3

SOMC = SOMC + CC — E4

SOMC ⩾ SEC — E5

Demande de notification DEM — E6

# FIG.3

```
┌─────────────────────────────┐
│      SOUSCRIPTION  NU       │
│ ─ ─ ─ ─ ─ ─ ─ ─ ─ ─ ─ ─ ─   │
│       PROGRAMMATION         │
│  M, SEC, TI, SP, P = M.SP   │
│ ─ ─ ─ ─ ─ ─ ─ ─ ─ ─ ─ ─ ─   │
```

ET0 — $[CJ_m]_1^M \equiv 0$

$SOMC \equiv 0 \quad m \equiv 1$

$TC = TI$ — non / oui

$CQ \equiv 0 \quad TI \equiv TC$ — ET1

$TC < TI + SP$ — ET2 — non / oui

ET3 — Message de coût MC (NU, CC) ? — non / oui

ET4 — $CQ \equiv CQ + CC$

ET5 — (fin de journée)
$SOMC \equiv SOMC - CJ_m + CQ$
$CJ_m \equiv CQ$
$m \equiv m \ (\text{modulo } M) + 1$

ET6 — $SOMC \geqslant SEC$ — non / oui

ET7 — Demande de notification DEM

# *FIG.4*

E0 — SOUSCRIPTION
NU, P, SEC, TI, SED

TC = TI → non

oui

E8 — Désactivation de notification

SOMC = 0    TI = TC
SOMD = 0 — E1

oui

non — DEM ? — non — TC < TI + P — E2

E7

oui

E3 — Message de coût
MC (NU, CC, DC) ? — non

oui

E4 — SOMC = SOMC + CC
SOMD = SOMD + DC

E54 — SOMC ≥ SEC — non — SOMD ≥ SED — non
E52

oui          oui

E6 — Demande de notification DEM

*FIG.5*

SOUSCRIPTION NU

PROGRAMMATION
M,SEC,SED,TI,SP,P = M.SP

ET0

$[CJ_m]_1^M \equiv 0 \qquad [DJ]_1^M \equiv 0$

$SOMC \equiv 0 \quad SOMD = 0 \quad m \equiv 1$

TC = TI — non

oui

ET1 — CQ $\equiv$ 0 DQ $\equiv$ 0 TI $\equiv$ TC

non — TC < TI + SP — ET2

oui

ET3 — Message de coût MC (NU, CC, DC) ? — non

oui

ET4 —
CQ $\equiv$ CQ + CC
DQ $\equiv$ DQ + DC

(fin de journée)
$SOMC \equiv SOMC - CJ_m + CQ$
$SOMD \equiv SOMD - DJ_m + DQ$
$CJ_m \equiv CQ ; DJ_m \equiv DQ$
$m \equiv m \ (modulo \ M) \ +1$

ET5

ET62

ET61 — SOMC $\geqslant$ SEC — non SOMD $\geqslant$ SED — non

oui oui

Demande de notification DEM

ET7

## FIG.6

SDS      SGN      AC

[NSDS, NU
NDU/NIU, ND]

DEM

ARD

NOT

REJ, ERR

ARN

[NSGN,NU,
NDU/NIU]

REP

temps

ARR

## FIG.7

SDS      SGN      AC

DEM

NOT(NDU,NIU)

ARD

NDU

REP (NDU>0)

ARN
(NDU>0,NIU<0)

PT

ARR

NOT(NIU)

ARN

REP(NIU>0)

ARR

temps

## RAPPORT DE RECHERCHE EUROPEENNE

Office européen des brevets

Numéro de la demande
EP 98 40 3105

### DOCUMENTS CONSIDERES COMME PERTINENTS

| Catégorie | Citation du document avec indication, en cas de besoin, des parties pertinentes | Revendication concernee | CLASSEMENT DE LA DEMANDE (Int.Cl.6) |
|---|---|---|---|
| X | EP 0 705 019 A (AT & T CORP) 3 avril 1996 | 1-9 | H04M15/00 |
| A | * le document en entier * | 10-13 | H04M15/28 |
| A | EP 0 629 072 A (TELIA AB) 14 décembre 1994<br>* colonne 1, ligne 33 - ligne 39 *<br>* colonne 2, ligne 45 - ligne 53 * | 1-13 | |
| A | DE 42 19 416 A (GRUNDIG EMV)<br>16 décembre 1993<br>* le document en entier * | 1-13 | |
| A | WO 96 15633 A (SUORTTI ANSSI ;ERICSSON L M OY (FI); HENTILAE MARKO (FI)) 23 mai 1996<br>* page 11, ligne 21 - ligne 24 * | 1-13 | |

**DOMAINES TECHNIQUES RECHERCHES (Int.Cl.6)**

H04M

Le présent rapport a été établi pour toutes les revendications

| Lieu de la recherche | Date d'achèvement de la recherche | Examinateur |
|---|---|---|
| LA HAYE | 7 avril 1999 | Montalbano, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**     EP 98 40 3105

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

07-04-1999

| Document brevet cité au rapport de recherche | | Date de publication | Membre(s) de la famille de brevet(s) | | Date de publication |
|---|---|---|---|---|---|
| EP 0705019 | A | 03-04-1996 | US | 5559871 A | 24-09-1996 |
| | | | CA | 2154602 A | 24-03-1996 |
| | | | JP | 8191357 A | 23-07-1996 |
| EP 0629072 | A | 14-12-1994 | SE | 9302002 A | 12-12-1994 |
| DE 4219416 | A | 16-12-1993 | AUCUN | | |
| WO 9615633 | A | 23-05-1996 | FI | 945368 A | 12-05-1996 |
| | | | EP | 0792561 A | 03-09-1996 |

EPO FORM P0460

Pour tout renseignement concernant cette annexe : voir Journal Officiel de l'Office européen des brevets, No.12/82